# EUROPEAN PATENT APPLICATION

(11) **EP 3 291 431 A1**
(43) Date of publication of application: **07.03.2018**
(21) Application number: 15890535.6
(22) Date of filing: 26.08.2015
(51) Int. Cl.: H02M 3/335

(54) **ISOLATING POWER SUPPLY AND OUTPUT FEEDBACK METHOD THEREFOR**

(30) Priority: 27.04.2015 CN 201510205700
(71) Applicant: ZTE Corporation, Shenzhen, Guangdong 518057 (CN)
(72) Inventor: WANG, Linguo, Shenzhen Guangdong 518057 (CN)
(74) Representative: Brunazzi, Stefano
(86) International application number: PCT/CN2015/088183
(87) International publication number: WO 2016/173159

(57) **Abstract**

At least some embodiments of present invention provide an isolated power supply and an output feedback method for the isolated power supply. The isolated power supply includes: an inverter circuit, an isolation transformer, a rectifier circuit and a controller, wherein the isolation transformer comprises at least one primary winding and at least one secondary winding, and the controller is located at a side of the at least one primary winding; the inverter circuit is arranged to convert an input voltage signal of the isolated power supply into a first high-frequency switching signal, and transmit the first high-frequency switching signal to the at least one primary winding; the isolation transformer is arranged to couple the first high-frequency switching signal on the at least one primary winding to the at least one secondary winding, form a second high-frequency switching signal on the at least one secondary winding, couple the second high-frequency switching signal on the at least one secondary winding to the at least one primary winding and form a third high-frequency switching signal on the at least one primary winding; the rectifier circuit is arranged to convert the second high-frequency switching signal on the at least one secondary winding into a direct-current voltage signal; the controller is arranged to obtain the third high-frequency switching signal, obtain an amplitude of the direct-current voltage signal according to the third high-frequency switching signal, and control the inverter circuit according to the amplitude so as to configure the amplitude as a preset threshold value. The isolated power supply solves a problem of a large volume and small power density of a power supply.

## Description

### Technical Field

The present invention relates to the technical field of electronics, and in particular to an isolating power supply and an output feedback method for the isolating power supply.

### Background

In various power supply architecture, an electrical isolation is generally required between a front and rear stage power supply. That is, there is no direct electrical connection to guarantee system and personal safety, and to meet various safety requirements. An isolation of a main power transmitting portion is usually implemented by a transformer. An alternating current (AC) power supply is directly coupled through the transformer. While a direct-current (DC) power supply is required to first convert a DC voltage into a form of a high frequency pulse switch by an inverter circuit, which is composed of at least one switching component, such as a Metal-Oxide-Semiconductor Field-Effect-Transistor (MOSFET), and then to coupled transfer an alternating current component of the DC power supply by the transformer. At a secondary side of the transformer, an isolated AC voltage is converted into the DC voltage by a rectifying circuit.

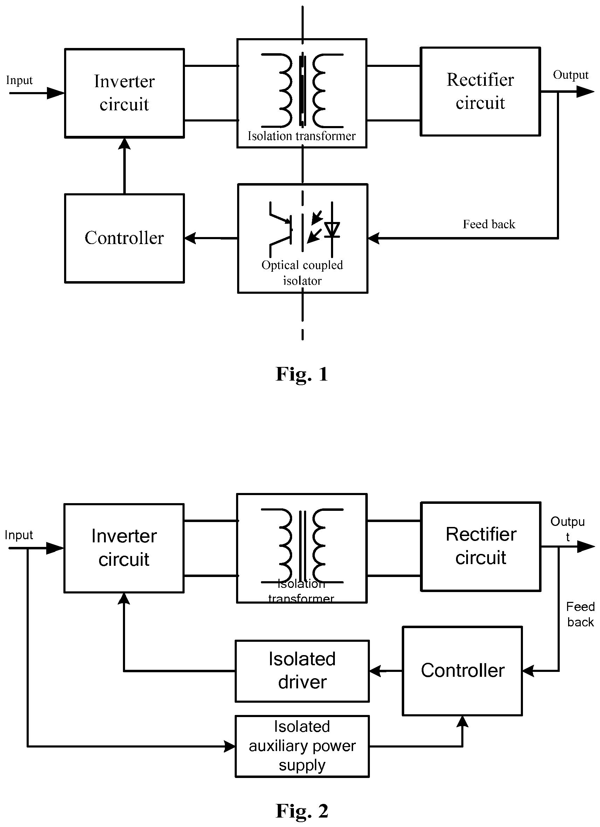

At present, an isolated switching power supply has advantages of small size, high conversion efficiency and isolated power supply, and the isolated switching power supply is widely used in various circumstances of power supply. In most application circumstances, the isolated switching power supply requires to output a constant voltage. That is, a feedback control is required for an output voltage. When the output voltage offsets a preset value, a control circuit performs adjustment according to an error signal between the output voltage and the preset value, so as to ensure that when an input voltage, load current, etc. are changed, the output voltage of the power supply is kept stable. In the related art, since the control circuit is powered by an input power supply and the control circuit is usually located at a primary side of the transformer, at this time, an isolation processing is performed on the output voltage, which is located at the secondary side of the transformer, before the output voltage is transferred to a controller. Further, since an amplitude signal of the output voltage is required to transfer and there is no need to transfer a power of the output voltage, an optical coupler isolation mode is employed. An optical coupling is an isolation component for converting an electric signal into an optical signal and then converting the optical signal back to the electrical signal. A DC signal conversion is directly, without requiring an inverter circuit and a rectifier circuit in a transformer conversion mode, performed by the optical coupling. Therefore, the optical coupler isolation mode is a preferred mode in the related art. In an actual circuit, another separate optical coupling component is required to meet a over-voltage fast protection requirement of the output voltage. As shown in Fig. 1, a typical structure and feedback mode of an isolated power supply. An input voltage is required to firstly be converted into a high-frequency switching signal by an inverter circuit. And after the high-frequency switching signal is isolate coupled to a secondary winding through a transformer, the high-frequency switching signal is reverted to a DC voltage for outputting by a rectifier circuit. Since a controller of a power supply and a inverter circuit, which is a control object of the controller are located at a primary side of the transformer, the controller is located at the primary side is a common scheme. At least one signal is transmitted from the output voltage to the controller through an optical coupling isolator. And then the controller adjusts a switching component of the inverter circuit so that the output voltage is stabilized at a preset value.

With the continuous development of requirements, increasingly high requirements of efficiency and power density of a switching power supply are proposed. It requires to constant reduce sizes of components, which do not participate in power change, such as a control circuit and the like. And it also requires a high integration level of the controller, for example digital control is a trend of wide application. However, due to a requirement of a safety distance between each of pins at a primary side of a component, such as an optical coupling component, and each of pins at the secondary side of the component, it is difficult to further reduce a volume of this component.

In an application of a digital controller, due to built-in of a controller parameter configuration component and a sampling signal conditioning circuit, a peripheral circuit is greatly reduced. Thus the controller is located at the secondary side of the transformer, so that there is no need to isolate a path from the output voltage to the controller, so as to omit two optical couplers and at least one matching circuit. However, as mentioned above, an input voltage at a primary side supplies power to the controller, therefore, isolation requirements are required for a power supply circuit. That is, an isolating auxiliary power supply with the same safety distance requirements is required, thereby causing that an isolation transformer has a large volume. As shown in Fig. 2, a controller is located at a secondary side of an isolation transformer. The output voltage is directly feedback to the controller without isolating. An advantage of reducing a peripheral circuit of a digital controller is fully utilized. Therefore, locating the controller at the secondary side of the isolation transformer is a common scheme of a current digital power supply. However, a problem with this scheme is that the power supply of the controller is obtained from the input voltage at a primary side of the isolation transformer through an isolating auxiliary power supply. An output of the controller is required to pass through an isolation driver to the inverter circuit at the primary side of the isolation transformer.

In summary, in the existing isolated power supply control scheme, an optical coupling isolation is required for an output voltage feedback signal or transformer isolation is required for an auxiliary power supply supplying power to the controller. Thus a current volume of an isolation switch power supply is large, and a power density of the isolation switch power supply is small.

### Summary

At least some embodiments of present invention provide an isolating power supply and an output feedback method for the isolating power supply, so as at least to partially solve a problem that a current volume of an isolation switch power supply is large, and a power density of the isolation switch power supply is small.

In order to solve the technical problem, an embodiment of the present invention provides the isolating power supply, including: an inverter circuit, an isolation transformer, a rectifier circuit and a controller, wherein the isolation transformer includes at least one primary winding and at least one secondary winding, and the controller is located at a side of the at least one primary winding; the inverter circuit is arranged to convert an input voltage signal of the isolated power supply into a first high-frequency switching signal, and transmit the first high-frequency switching signal to the at least one primary winding; the isolation transformer is arranged to couple the first high-frequency switching signal on the at least one primary winding to the at least one secondary winding, form a second high-frequency switching signal on the at least one secondary winding, couple the second high-frequency switching signal on the at least one secondary winding to the at least one primary winding and form a third high-frequency switching signal on the at least one primary winding; the rectifier circuit is arranged to convert the second high-frequency switching signal on the at least one secondary winding into a direct-current voltage signal; the controller is arranged to obtain the third high-frequency switching signal, obtain an amplitude of the direct-current voltage signal according to the third high-frequency switching signal, and control the inverter circuit according to the amplitude so as to configure the amplitude as a preset threshold value.

In one embodiment, the controller is arranged to obtain the third high-frequency switching signal from the at least one primary winding.

In one embodiment, the at least one primary winding includes a first primary winding and a second primary winding; the inverter circuit is arranged to transmit the first high-frequency switching signal to the first primary winding; the isolation transformer is arranged to couple the first high-frequency switching signal on the first primary side winding to the secondary winding, form the second high-frequency switching signal on the secondary winding, couple the second high-frequency switching signal on the secondary winding to the second primary side winding and form the third high-frequency switching signal on the second primary winding; the controller is arranged to obtain the third high-frequency switching signal from the second primary winding.

In one embodiment, the isolated power supply further includes: a resonant circuit; the resonant circuit is arranged to, before the first high-frequency switching signal is transmitted from the inverter circuit to the isolation transformer, perform resonant processing on the first high-frequency switching signal.

In one embodiment, the inverter circuit is further arranged to receive the third high-frequency switching signal from the at least one primary winding; the controller is arranged to obtain the third high-frequency switching signal from the inverter circuit.

In one embodiment, the controller is arranged to obtain the third high-frequency switching signal from a signal input end of the inverter circuit, wherein the signal input end is arranged to receive the input voltage signal.

In one embodiment, the inverter circuit is a full-bridge circuit composed of four Metal Oxide Semiconductor, MOS, transistors.

In one embodiment, the full-bridge circuit includes a first N-channel Metal Oxide Semiconductor, NMOS, transistor, a second NMOS transistor, a third NMOS transistor, a fourth NMOS transistor, a first signal input end and a second signal input end; a drain electrode of the first NMOS transistor having is connected with the first signal input end, a source electrode of the first NMOS transistor is connected with a drain electrode of the second NMOS transistor, the source electrode of the first NMOS transistor is further connected with one end of the at least one primary winding, a source electrode of the second NMOS source is connected with the second signal input end; a drain electrode of the fourth NMOS transistor is connected with the first signal input end, a source electrode of the fourth NMOS transistor is connected with a drain electrode of the third NMOS transistor, the source electrode of the fourth NMOS transistor is connected with another end of the at least one primary winding, and an source electrode of the third NMOS transistor is connected with the second signal input end; a grid electrode of the first NMOS transistor, a grid electrode of the second NMOS transistor, a grid electrode of the third NMOS transistor and a grid electrode of the fourth NMOS transistor are connected with the controller; the controller is connected with the first signal input end or the second signal input end.

In one embodiment, the controller includes: an amplitude obtaining component and a loop control component; the amplitude obtaining component is arranged to obtain the third high-frequency switching signal, and obtain the amplitude of the direct-current voltage signal according to the third high-frequency switching signal; the loop control component is arranged to compare the amplitude with the preset threshold value, and control the inverter circuit according to a comparison result so as to configure the amplitude as the preset threshold value.

In one embodiment, the amplitude obtaining component is an analog-to-digital conversion component; the analog-to-digital conversion component is arranged to obtain the third high-frequency switching signal, convert the third high-frequency switching signal to a digital signal, and obtain the amplitude of the DC voltage signal according to the digital signal.

In order to solve the technical problem, an embodiment of the present invention provides the output feedback method for the isolating power supply, including:
coupling, by an isolation transformer of the isolated power supply, a first high-frequency switching signal on at least one secondary winding to at least one primary winding and forming, by an isolation transformer of the isolated power supply, a second high-frequency switching signal on the at least one primary winding, wherein the isolation transformer includes: the at least one primary winding and the at least one secondary winding; obtaining, by a controller at a side of the at least one primary winding, the second high-frequency switching signal, obtaining, by the controller, an amplitude of a direct-current voltage signal according to a third high frequency switching signal, and controlling, by the controller, an inverter circuit according to the amplitude so as to configure the amplitude of the DC voltage signal as a preset threshold value.

In one embodiment, obtaining, by the controller at the side of the at least one primary winding, the second high-frequency switching signal includes: obtaining, by the controller at the side of the at least one primary winding, the second high-frequency switching signal from the at least one primary winding; or, when the isolation transformer transmits the second high-frequency switching signal to an inverter circuit of the isolated power supply, obtaining, by the controller at the side of the at least one primary winding, the second high-frequency switching signal from the inverter circuit.

Beneficial effects of at least some embodiments of the present invention are as follows.

At least some embodiments of the present invention provide the isolated power supply and the output feedback method for the isolated power supply. The isolated power supply includes: an inverter circuit, an isolation transformer, a rectifier circuit and a controller, wherein the isolation transformer comprises at least one primary winding and at least one secondary winding, and the controller is located at a side of the at least one primary winding; the inverter circuit is arranged to convert an input voltage signal of the isolated power supply into a first high-frequency switching signal, and transmit the first high-frequency switching signal to the at least one primary winding; the isolation transformer is arranged to couple the first high-frequency switching signal on the at least one primary winding to the at least one secondary winding, form a second high-frequency switching signal on the at least one secondary winding, couple the second high-frequency switching signal on the at least one secondary winding to the at least one primary winding and form a third high-frequency switching signal on the at least one primary winding; the rectifier circuit is arranged to convert the second high-frequency switching signal on the at least one secondary winding into a direct-current voltage signal; the controller is arranged to obtain the third high-frequency switching signal, obtain an amplitude of the direct-current voltage signal according to the third high-frequency switching signal, and control the inverter circuit according to the amplitude so as to configure the amplitude as a preset threshold value. The isolated power supply utilizes a characteristic of a bidirectional coupling of the isolation transformer, and reverse-couples and feeds back an amplitude signal of an output voltage of the isolated power supply through the isolation transformer originally existed in the isolated power supply, so as to avoid using an optical coupling component to feedback the amplitude signal. Moreover, in the isolated power supply, the controller is set at the primary side of the isolation transformer, so as to avoid using a transformer to perform isolation when the controller is set at the secondary side of the isolation transformer and the power is supplied to the controller. Thus, it can be seen that there is no need to increase the optical coupling component to the feedback amplitude signal and, when the power is supplied to the controller, there is also no need to increase the transformer for isolation during a process of the output feedback of the isolated power supply. Compared with the related art, the technical solution recited in the present invention can reduce a volume of an isolated switching power supply and improve a power density of the isolated switching power.

### Brief Description of the Drawings

Fig. 1 is a structural schematic of an isolated switching power supply according to the related art.
Fig. 2 is a structural schematic of another isolated switching power supply according to the related art.
Fig. 3 is a structural schematic of an isolated power supply according to a first exemplary embodiment of the present invention.
Fig. 4 is a structural schematic of another isolated power supply according to a first exemplary embodiment of the present invention.
Fig. 5 is a structural schematic of another isolated power supply according to a first exemplary embodiment of the present invention.
Fig. 6 is a structural schematic of an inverter circuit and a rectifier circuit according to a first exemplary embodiment of the present invention.
Fig. 7 is a structural schematic of another inverter circuit and a rectifier circuit according to a first exemplary embodiment of the present invention.
Fig. 8 is a schematic of increasing an inductor in an isolated power supply according to a first exemplary embodiment of the present invention.
Fig. 9 is a structural schematic of a controller according to a first exemplary embodiment of the present invention.
Fig. 10 is a structural schematic of another controller according to a first exemplary embodiment of the present invention.
Fig. 11 is a structural schematic of an isolated power supply according to a second exemplary embodiment of the present invention.
Fig. 12 is a schematic of a voltage signal waveform according to a second exemplary embodiment of the present invention.
Fig. 13 is a structural schematic of an isolated power supply according to a third exemplary embodiment of the present invention.
Fig. 14 is a structural schematic of an isolated power supply according to a fourth exemplary embodiment of the present invention.
Fig. 15 is a structural schematic of a resonant circuit according to a fourth exemplary embodiment of the present invention.
Fig. 16 is a structural schematic of an isolated power supply according to a fifth exemplary embodiment of the present invention.
Fig. 17 is a schematic of a voltage signal waveform according to a fifth exemplary embodiment of the present invention.
Fig. 18 is a flowchart of an output feedback method for an isolated power supply according to a sixth exemplary embodiment of the present invention.

### Detailed Description

It is considered that in an existing control scheme of an isolated power supply, an optical coupling isolation is required to perform on an output voltage feedback signal or a transformer is used for isolating an auxiliary power supply supplying power to a controller, so as to cause a large volume and a small power density of an isolated switching power supply. At least some embodiments of present invention provide an output feedback scheme for an isolated power supply. A core idea of this output feedback scheme is as follows. Through a characteristic of bidirectional coupling feedback of an isolation transformer in the isolated power supply, the isolation transformer is arranged to obtain at least one amplitude signal of an output voltage, set a controller, which is used to obtain at least one feedback signal and output voltage amplitude value according to the at least one feedback signal, at a primary winding of the isolation transformer, so as to control the isolated power supply. By adopting this scheme, an optical coupling component is increased to feedback signals without isolating a power supply of the controller, which can reduce the volume of the isolated power supply, thereby improving the power density of the isolated power supply.

Detailed description of the present invention will be further described below through specific embodiments with reference to accompanying drawings.

### Embodiment One

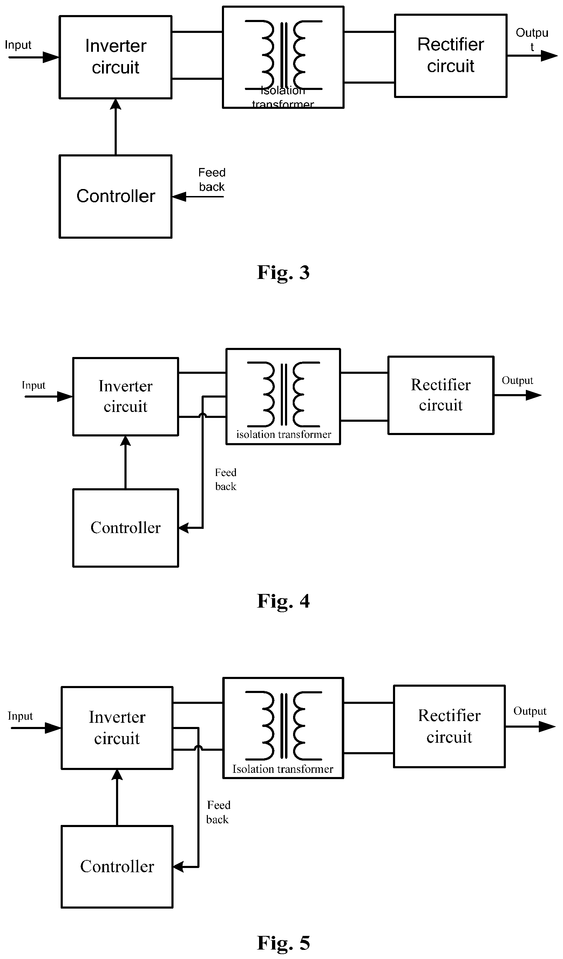

This embodiment provides an isolated power supply, as shown in Fig. 3, which includes: an inverter circuit, an isolation transformer, a rectifying circuit and a controller. The isolation transformer includes at least one primary winding (hereinafter referred to as a primary side) and at least one secondary winding (hereinafter referred to as a secondary side), and the controller is located at a side of the primary winding.

The inverter circuit is arranged to convert an input voltage signal of the isolated power supply into a first high-frequency switching signal, and transmit the first high-frequency switching signal to the at least one primary winding.

The isolation transformer is arranged to couple the first high-frequency switching signal on the at least one primary winding to the at least one secondary winding, form a second high-frequency switching signal on the at least one secondary winding, couple the second high-frequency switching signal on the at least one secondary winding to the at least one primary winding and form a third high-frequency switching signal on the at least one primary winding.

The rectifier circuit is arranged to convert the second high-frequency switching signal on the at least one secondary winding into a direct-current voltage signal.

The controller is arranged to obtain the third high-frequency switching signal, obtain an amplitude of the direct-current voltage signal according to the third high-frequency switching signal, and control the inverter circuit according to the amplitude so as to configure the amplitude as a preset threshold value.

In this embodiment, after the isolation transformer reverse-couples the second high-frequency switching signal to the primary side, the controller located at the primary side obtains the third high-frequency switching signal from the primary side. And then the controller obtains the amplitude of the isolated power supply output voltage signal according to the third high-frequency switching signal, so as to control the isolated power supply according to the amplitude, so that he isolated power supply can output at least one constant DC voltage signal.

In this embodiment, there are multiple ways for obtaining, by the controller at the primary side of the isolation transformer, the third high-frequency switching signal. Alternatively, the controller of this embodiment obtains the third high-frequency switching signal from the primary side. For example, as shown in Fig. 4, the controller is connected with a primary side, so as to obtain the third high-frequency switching signal from the primary side. In this embodiment, when the inverter circuit receives the third high-frequency switching signal from the primary side of the isolation transformer, the controller also obtains the third high-frequency switching signal from the inverter circuit. As shown in Fig. 5, one end of the controller is connected with the inverter circuit to obtain the third high-frequency switching signal. Another end of the controller is also connected with the inverter circuit, and the inverter circuit is controlled through the connection between the controller and the inverter circuit, so as to make the isolated power supply output the at least one constant DC voltage signals.

In this embodiment, the ways of obtaining, by the controller, the third high-frequency switching signal are not limited to above-mentioned two ways. Other ways are configured according to a circuit structure of each isolated power supply. For example, when other components are connected with the primary side of the isolated power supply, the controller also obtains the third high-frequency switching signal from the other components.

In this embodiment, a way of controlling, by the controller, the inverter circuit is as follows. When the inverter circuit is composed of at least one switch transistor component, the controller controls the at least one switch transistor component of the inverter circuit to ensure the output voltage of the isolated power supply to stabilize at a preset value. In this embodiment, any one way of adjusting the inverter circuit to ensure the output voltage of the isolated power supply to be a constant value is applied.

In this embodiment, the isolated power supply utilizes a characteristic of a bidirectional coupling of the isolation transformer, and reverse-couples and feeds back an amplitude signal of an output voltage of the isolated power supply through the isolation transformer originally existed in the isolated power supply, so as to avoid using an optical coupling component to feedback the amplitude signal. Moreover, in the isolated power supply, the controller is set at the primary side of the isolation transformer, so as to avoid using a transformer to perform isolation when the controller is set at the secondary side of the isolation transformer and the power is supplied to the controller. Thus, it can be seen that there is no need to increase the optical coupling component to the feedback amplitude signal and, when the power is supplied to the controller, there is also no need to increase the transformer for isolation during a process of the output feedback of the isolated power supply. Compared with the related art, the technical solution recited in the present invention can reduce a volume of an isolated switching power supply and improve a power density of the isolated switching power.

Optionally, in this embodiment, the inverter circuit is a full-bridge circuit or a half-bridge circuit composed of at least one MOS transistor. For example, four MOS transistors constitute a full-bridge circuit, or two MOS transistors constitute a push-pull inverter circuit. Moreover, in this embodiment, the rectifier circuit is also a full-bridge circuit or a half-bridge circuit composed of at least one MOS transistor. For example, four MOS transistors constitute a full-bridge circuit, or two MOS transistors constitute a center-tapped rectifier circuit. The isolation transformer in this embodiment is a conventional isolation transformer including one primary winding and one secondary winding, or two primary windings and two secondary windings. Of course, the isolation transformer in this embodiment is also obtained by performing some improvements on the conventional isolation transformer. For example, one primary winding and a secondary winding are increased into the conventional isolation transformer, which originally includes one primary winding and one secondary winding to coupling feedback the third high-frequency switching signal.

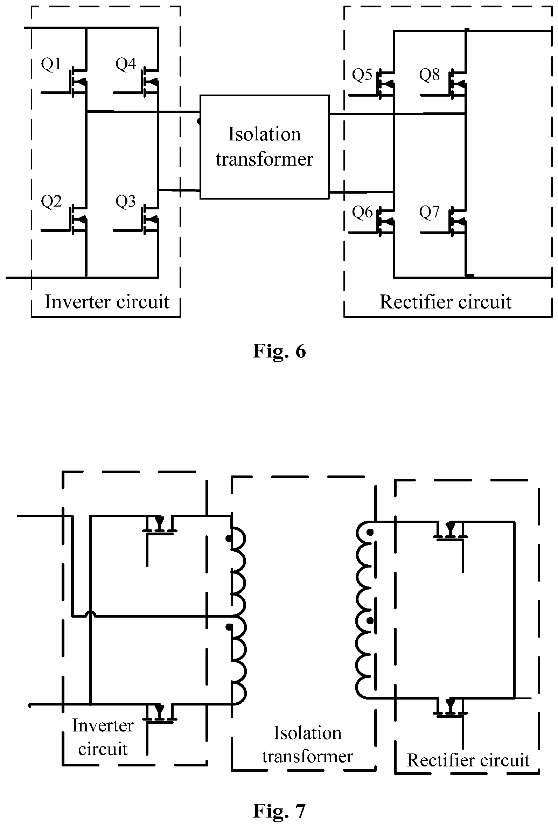

As shown in Fig. 6, in this embodiment, an inverter circuit is a full-bridge circuit composed of four NMOS transistors Q1, Q2, Q3 and Q4. A rectifier circuit is a full-bridge circuit composed of four NMOS transistors Q5, Q6, Q7 and Q8.

As shown in Fig. 7, in this embodiment, a inverter circuit is a push-pull inverter circuit composed of two NMOS transistors Q1 and Q2. A rectifier circuit is a center-tapped rectification circuit composed of two NMOS transistors Q3 and Q4.

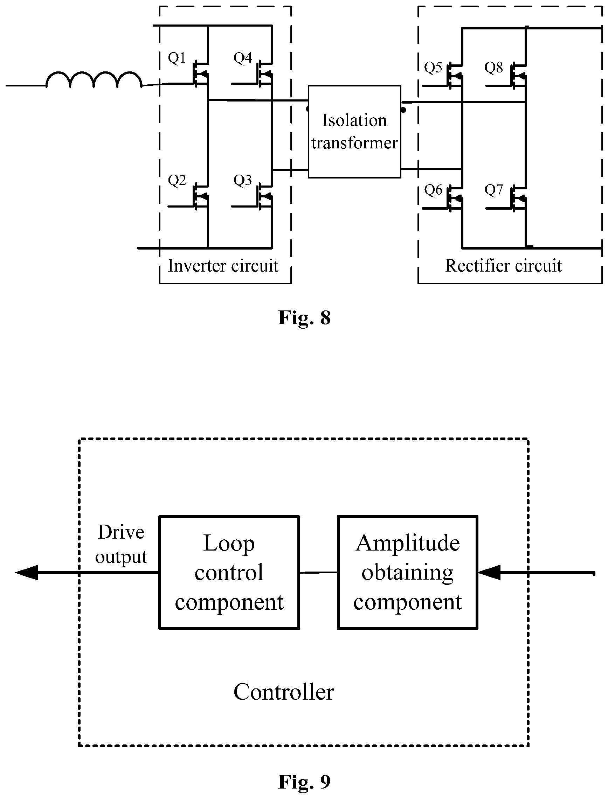

To enable a pressure regulating, an inductor is increased into the isolated power supply in this embodiment, at least one input voltage signal is received through the inductor. For example, as shown in Fig. 8, an inductor may be increased into a circuit structure as shown in Fig. 6, a full-bridge circuit is connected with an input power supply through the inductor and is used to receive at least one input voltage signal outputted by an input voltage. For example, an inductor is increased into a circuit structure as shown in Fig. 7, a push-pull inverter circuit is connected with an input power supply through an inductor and is used to receive at least one input voltage signal outputted by an input voltage.

The controller in this embodiment obtains a amplitude of a DC voltage signal according to the third high-frequency switching signal, and controls the inverter circuit so as to configure the amplitude of the DC voltage signal as a preset threshold value. Specifically, since the third high-frequency switching signal at the primary side is coupling generated, by the isolation transformer, according to the second high-frequency switching signal at the secondary side. Thus, the third high-frequency switching signal is equal to a product of the second high-frequency switching signal and a turns ratio. That is, the third high-frequency switching signal V3 = the second high-frequency switching signal V2 * the turns ratio N, in which n is the turns ratio of the primary side and the secondary side of the isolation transformer. In this embodiment, after the controller obtains the third high-frequency switching signal V3, the second high-frequency switching signal V2 is obtained by dividing V3 by N. After the second high-frequency switching signal is calculated, the amplitude of the second high-frequency switching signal is obtained. In this embodiment, since a DC voltage signal outputted by the isolated power supply is obtained rectifying the second high-frequency switching signal. Thus, the amplitude of the second high-frequency switching signal is the amplitude of the DC voltage signal outputted by the isolated power supply. At this moment, the controller control the inverter circuit according to the amplitude of the DC voltage signal so as to configure the amplitude of the DC voltage signal outputted by the isolated power supply as the preset threshold value. That is, the DC voltage is constantly outputted. Specifically, the controller compares the acquired amplitude value with the preset threshold value (i.e. a preset output voltage value) and then the inverter circuit is controlled according to a comparison result.

As shown in Fig. 9, in this embodiment, the controller includes an amplitude obtaining component and a loop control component.

The amplitude obtaining component is arranged to obtain the third high-frequency switching signal, and obtain the amplitude of the direct-current voltage signal according to the third high-frequency switching signal.

The loop control component is arranged to compare the amplitude with the preset threshold value, and control the inverter circuit according to a comparison result so as to configure the amplitude as the preset threshold value.

The amplitude obtaining component in this embodiment converts the third high-frequency switching signal into the DC voltage signal. And then the DC voltage signal outputted by the isolated power supply is obtained according to the turns ratio and the conversed DC voltage signal. Finally, the amplitude is extracted from the DC voltage signal outputted by the isolated power supply.

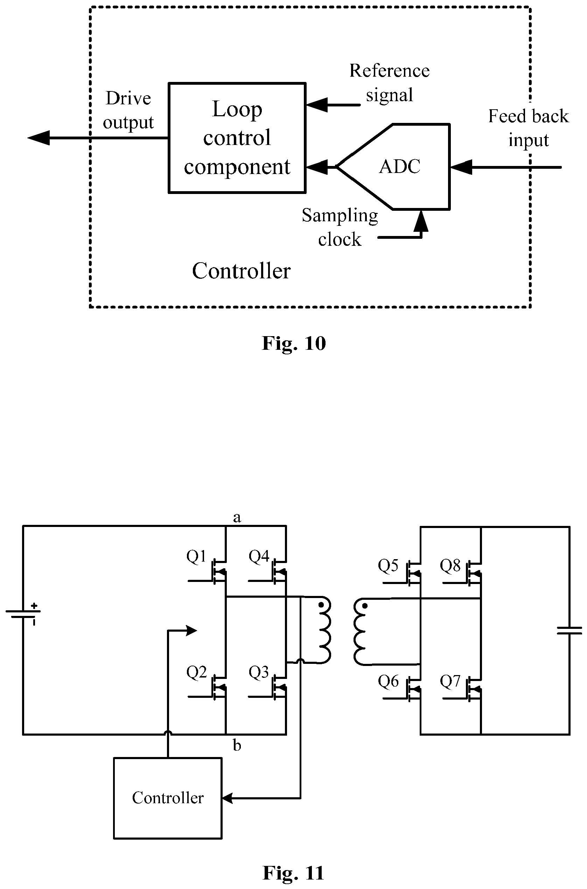

However, at present, a conventional way of converting the high-frequency switching signal into a DC voltage signal is realized by a diode rectifying, but a speed and bandwidth of this way are relatively slow and not be available for rapid adjustment of the controller. To facilitate the amplitude comparison and accelerate the feedback speed to achieve a purpose of quickly adjusting the voltage, in this embodiment, the amplitude obtaining component is an analog-to-digital conversion component. The analog-to-digital conversion component is arranged to obtain the third high-frequency switching signal, convert the third high-frequency switching signal into a digital signal, and then obtain the amplitude of the DC voltage signal according to the digital signal. Specifically, in this embodiment, an ADC set at a preset time point converts the feedback signal into the digital signal so as to obtain the amplitude of the DC voltage signal. For example, as shown in Fig. 10, the amplitude obtaining component is an analog-to-digital conversion component (ADC). The amplitude obtaining component collects the amplitude signal of the third high-frequency switching signal at a forward time point of the third high-frequency switching signal. The amplitude obtaining component converts the amplitude signal to the digital signal and obtains the amplitude of the DC voltage signal according to converted digital signal. The ADC in Fig. 10 transmits the digital signal corresponding to the amplitude of the DC voltage signal to the loop control component. The loop control component compares the digital signal with a preset power supply output reference signal (i.e. a reference signal corresponding to a preset output voltage value) to control switch transistors of the inverter circuit according to a comparison result to keep the output voltage the isolated power supply as a constant value. For example, the loop control component outputs at least one drive signal to switch transistors of the inverter circuit. In this embodiment, the loop control component is a PID control or the like, which is known to those skilled in the art and not explained herein.

### Embodiment Two

In this embodiment, the isolated power supply as shown in Fig. 4 of the embodiment one is specifically described with reference to the drawings. That is, the controller obtains the third high-frequency switching signal from the primary side.

As shown in Fig. 11, this embodiment provides an isolated power supply, including: an inverter circuit, an isolation transformer, a rectifier circuit and a controller. The isolation transformer includes at least one primary winding and at least one secondary winding. The controller is located at a side of the primary winding.

The inverter circuit is a full bridge circuit composed of four MOS transistors and a rectifier circuit is a full-bridge circuit composed of four MOS transistors.

Specifically, in this embodiment, the inverter circuit includes a first NMOS transistor Q1, a second NMOS transistor Q2, a third NMOS transistor Q4, a fourth NMOS transistor Q3, a first input end 'a' and a second input end 'b'. The first input end 'a' and the second input end 'b' are respectively connected with a positive pole and a negative pole of an input power supply.

A drain electrode of the first NMOS transistor Q1 is connected with the first signal input end. A source electrode of the first NMOS transistor Q1 is connected with a drain electrode of the second NMOS transistor Q2. The source electrode of the first NMOS transistor Q1 is also connected with one end of the at least one primary winding. The source electrode of the first NMOS transistor Q2 is connected with the second signal input end.

A drain electrode of the fourth NMOS transistor Q3 is connected with the first signal input end. A source electrode of the fourth NMOS transistor Q3 is connected with a drain electrode of the third NMOS transistor Q4. The source electrode of the fourth NMOS transistor Q4 is also connected with another end of the at least one primary winding. The source electrode of the third NMOS transistor Q4 is connected with the second signal input end.

A grid electrode of the first NMOS transistor Q1, a grid electrode of the second NMOS transistor Q2, a grid electrode of the third NMOS transistor Q4 and a grid electrode of the fourth NMOS transistor Q3 are connected with the controller.

The controller is connected with the at least one primary winding of the isolation transformer.

The rectifying circuit includes a fifth NMOS transistor Q5, a sixth NMOS transistor Q6, a seventh NMOS transistor Q8, an eighth NMOS transistor Q7 and a capacitor.

A drain electrode of the fifth NMOS transistor Q5 is connected with a drain electrode of the seventh NMOS transistor Q8. A source electrode of the fifth NMOS transistor Q5 is connected with a drain electrode of the sixth NMOS transistor Q6. The source electrode of the sixth NMOS transistor Q6 is connected with a source electrode of the eighth NMOS transistor Q7. The source electrode of the fifth NMOS transistor Q5 is also connected with one end of the at least one secondary winding.

A source electrode of the seventh NMOS transistor Q8 is connected with a drain electrode of the eighth NMOS transistor Q7. The source electrode of the seventh NMOS transistor Q8 is also connected with another end of the at least one secondary winding.

The source electrode of the seventh NMOS transistor Q8 is also connected with one end of the capacitor. The drain electrode of the eighth NMOS transistor Q7 is also connected with another end of the capacitor. The first input end and the second input end are respectively connected with two ends of the capacitor.

A grid electrode of the fifth NMOS transistor Q5, a grid electrode of the sixth NMOS transistor Q6, a grid electrode of the seventh NMOS transistor Q8 and a grid electrode of the eighth NMOS transistor Q7 are used to receive at least one drive signal.

When Q1, Q3, or Q2, Q4 are turned on in the inverter circuit, the inverter circuit converts the input voltage signal into the first high-frequency switching signal, transmits the first high-frequency switching signal to the at least one primary winding. The isolation transformer couples the first high-frequency switching signal on the at least one primary winding to the at least one secondary winding to form the second high-frequency switching signal. When Q5, Q7, or Q6, Q8 are turned on in the rectifier circuit, the second high-frequency switching signal on the at least one secondary winding is converted into the DC voltage signal.

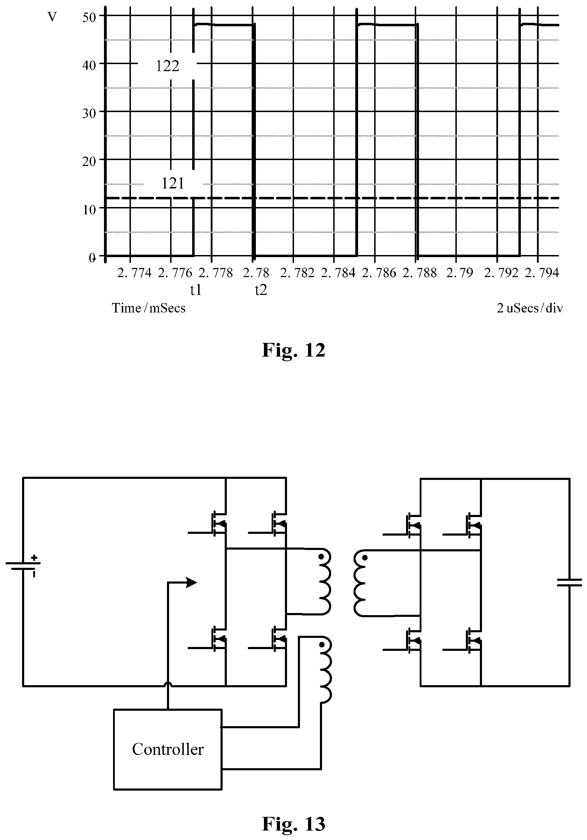

When Q5, Q7, or Q6, Q8 are turned on, the isolation transformer couples the second high-frequency switching signal on the at least one secondary winding the at least one primary winding and forms the third high-frequency switching signal on the at least one primary winding. After that, the control component connected with the at least one primary winding collects the third high-frequency switching signal on the at least one primary winding. As shown in Fig. 12, 121 is the amplitude of 12V output voltage waveform, 122 is a voltage waveform of at least one primary sampling point of Fig. 11. The turn ratio of the isolation transformer is 4:1. t1 to t2 is a turn on time period of rectifier circuit switching transistors Q6 and Q8. The controller as shown in Fig. 11 controls sampling operations during a time period from t1 to t2 through setting a sampling clock. A sampling result is divided by a turns ratio of a transformer to obtain the amplitude of the output voltage, which is used for controlling the MOS transistors in the inverter circuit.

In one embodiment, an inductor is also increased into the isolated power supply in this embodiment. The inverter circuit is connected with an input power supply through the inductor, and in particular to Fig. 11, the first input end is connected with the positive electrode of the input power source through the inductor.

### Embodiment Three

In this embodiment, shown in FIG. 4, at least one primary winding is increased into the isolation transformer of the isolated power supply to receive at least one feedback switching signal. As shown in Fig. 13, this embodiment provides another isolated power supply. The isolated power supply includes an inverter circuit, an isolation transformer, a rectifier circuit and a controller. The isolation transformer includes a first primary winding, a second primary winding and a secondary winding. The controller is located at a side of the primary winding and connected with the second primary winding.

The inverter circuit is a full-bridge circuit composed of four MOS transistors, and a rectifier circuit is a full-bridge circuit composed of four MOS transistors.

Specifically, in this embodiment, the inverter circuit includes a first NMOS transistor Q1, a second NMOS transistor Q2, a third NMOS transistor Q4, a fourth NMOS transistor Q3, a first input end 'a' and a second input end 'b'. The rectifier circuit includes a fifth NMOS transistor Q5, a sixth NMOS transistor Q6, a seventh NMOS transistor Q8, an eighth NMOS transistor Q7 and a capacitor. Specific connection relations of various components in the inverter circuit and the rectifying circuit refer to the description shown in Fig. 11 or Fig. 10. It is not specifically described herein.

When Q1, Q3, or Q2, Q4 are turned on in the inverter circuit, the inverter circuit converts the input voltage signal into the first high-frequency switching signal, transmits the first high-frequency switching signal to the first primary winding. The isolation transformer couples the first high-frequency switching signal on the first primary winding to the secondary winding to form the second high-frequency switching signal. When Q5, Q7, or Q6, Q8 are turned on in the rectifier circuit, the second high-frequency switching signal on the secondary winding is converted into the DC voltage signal.

When Q6, Q8, or Q5, Q7 are turned on, the isolation transformer couples the second high-frequency switching signal on the secondary winding the second primary winding and forms the third high-frequency switching signal on the second primary winding. After that, the control component connected with the second primary winding collects the third high-frequency switching signal on the second primary winding. As shown in Fig. 12, 121 is the amplitude of 12V output voltage waveform, 122 is a voltage waveform of at least one primary sampling point of Fig. 11. The turn ratio of the isolation transformer is 4:1. t1 to t2 is a turn on time period of rectifier circuit switching transistors Q6 and Q8. The controller as shown in Fig. 11 controls sampling operations during a time period from t1 to t2 through setting a sampling clock. A sampling result is divided by a turns ratio of a transformer to obtain the amplitude of the output voltage, which is used for controlling the MOS transistors in the inverter circuit.

In one embodiment, an inductor is also increased into the isolated power supply in this embodiment. The inverter circuit is connected with an input power supply through the inductor, and in particular to Fig. 13, the first input end is connected with the positive electrode of the input power source through the inductor.

### Embodiment Four

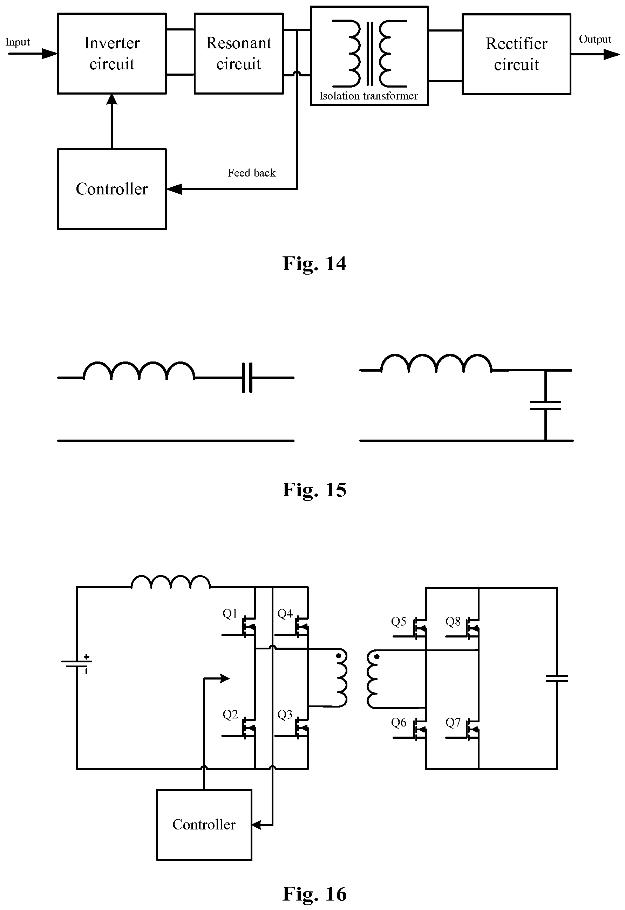

In order to achieve zero-voltage and zero-current switch, reduce switching loss and improve efficiency, as shown in Fig. 14, in this embodiment, a resonant circuit is increased into the isolated power supply as shown in Fig. 4. The isolated power supply provided in this embodiment includes: an inverter circuit, an isolation transformer, a rectifier circuit and a controller. The isolation transformer includes at least one primary winding and at least one secondary winding. The controller is located at a side of the at least one primary winding.

The inverter circuit is arranged to convert input voltage signal inputted by the isolated power supply into the first high-frequency switching signal.

The resonant circuit is arranged to perform a resonant process on the first high-frequency switching signal outputted by the inverter circuit and transmit the processed first high-frequency switching signal to the at least one primary winding of the isolation transformer.

The isolation transformer is arranged to couple the first high-frequency switching signal on the at least one primary winding to the at least one secondary winding to form the second high-frequency switching signal on the at least one secondary winding, and couple the second high-frequency switching signal on the at least one secondary winding on to the at least one primary winding to form the third high-frequency switching signal on the at least one primary winding.

The rectifying circuit is arranged to convert the second high-frequency switching signal on the at least one secondary winding into the DC voltage signal.

The controller is arranged to obtain the third high-frequency switching signal from the at least one primary winding, obtain the amplitude of the DC voltage signal according to the third high-frequency switching signal, and control the inverter circuit according to the amplitude value so as to configure a voltage value of the DC voltage signal as a preset threshold value.

In this embodiment, a current sine wave to the transformer is implemented by the resonant circuit, so as to achieve zero-voltage and zero-current switching, reduce the switching loss and improving the efficiency.

A circuit structure of the resonant circuit in this embodiment is in a variety of forms, as shown in Fig. 15, are two common resonant circuits.

### Embodiment Fifth

In this embodiment, the isolated power supply as shown in Fig. 5 of the embodiment one is specifically described with reference to the drawings. That is, the controller obtains the third high-frequency switching signal from the inverter circuit.

As shown in Fig. 16, the isolated power supply provided in this embodiment includes: an inverter circuit, an isolation transformer, a rectifier circuit and a controller. The isolation transformer includes at least one primary winding and at least one secondary winding. The controller is located at a side of the at least one primary winding.

The inverter circuit is a full-bridge circuit composed of four MOS transistors, and a rectifier circuit is a full-bridge circuit composed of four MOS transistors.

Specifically, in this embodiment, the inverter circuit includes a first NMOS transistor Q1, a second NMOS transistor Q2, a third NMOS transistor Q4, a fourth NMOS transistor Q3, a first input end 'a' and a second input end 'b'. The rectifier circuit includes a fifth NMOS transistor Q5, the sixth NMOS transistor Q6, a seventh NMOS transistor Q8, an eighth NMOS transistor Q7 and a capacitor. Specific connection relations of various components in the inverter circuit and the rectifying circuit refer to the description of Fig. 11. It is not specifically described herein.

As shown in Fig. 16, the controller is connected with the first input end 'a', in order to obtain the third high-frequency switching signal. It will be appreciated that, in another embodiment, the controller is also connected with the second input terminal 'b' so as to obtain the third high-frequency switching signal.

When Q6, Q8 or Q5, Q7 of the rectifier circuit at the secondary side are alternately turned on, the isolation transformer couples the second high-frequency switching signal at the secondary side to the primary winding to form the third high-frequency switching signal N*Vout. Vout is the second high-frequency switching signal at the secondary side, and N is a turns ratio of the primary side of the transformer and the secondary side of the transformer.

When switch transistors Q1, Q3 and Q2, Q4 of the full-bridge circuit are turned on and are coupled to the first input end 'a'. Similarly, the voltage signal obtained by an input node is N*Vout. At the moment, the controller connected with the first input end 'a' receives the voltage signal N*Vout. The N*Vout is then divided by the turns ratio N to obtain the second high-frequency switching signal at the secondary side. And then the amplitude of the DC voltage signal outputted by the isolated power supply is obtained, so as to control the inverter circuit according to the amplitude.

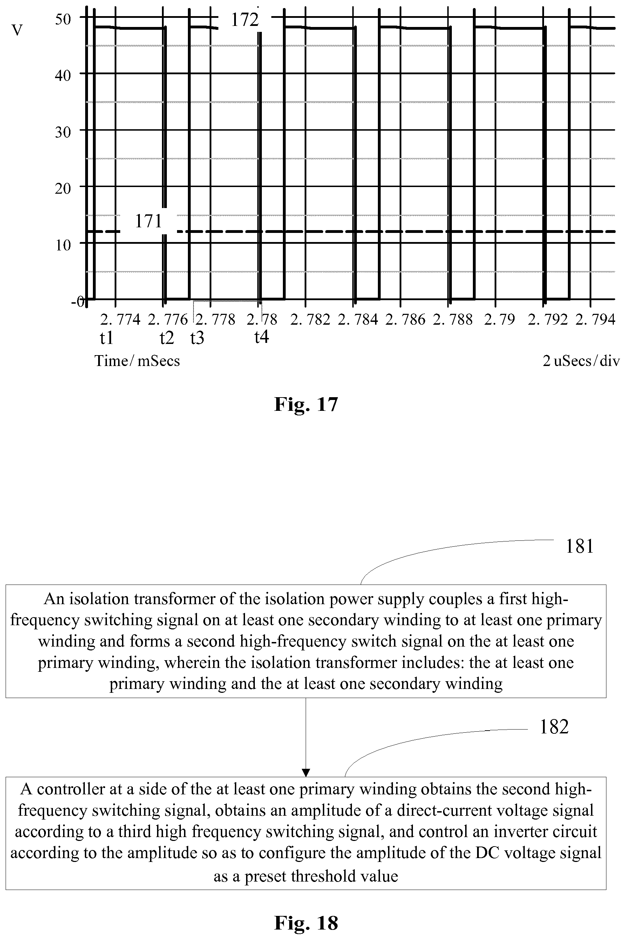

As shown in Fig. 17, 171 is the amplitude 12V of the output voltage waveform, 172 is the voltage waveform of at least one primary sampling point as shown in Fig. 14, and the turns ratio of the transformer is 4:1. t1 to t2 is a turn-on time period of the secondary side rectifier circuit switch transistors Q6, Q8 and the primary side inverter circuit switch transistors Q1, Q3. t3 to t4 is a turn-on time period of the secondary side rectifier switch transistors Q5, Q7, and the primary side inverter circuit switch transistors Q2, Q4. The controller as shown in Fig. 17 controls sampling operations during a time period from t1 to t2 or t3 to t4 through setting a sampling clock. A sampling result is divided by a turns ratio of a transformer to obtain the amplitude of the output voltage, which is used for controlling loop.

In this embodiment, the third high-frequency switching signal is obtained from the input end of the inverter circuit, but it should be understood that, the present invention also provides the ways of obtaining the third high-frequency switching signal from other components or other paths in the inverter circuit to obtain the third high-frequency switching signal.

Compared with the related art, there is no need to increase the optical coupling isolation component into the isolated power supply, so as to reduce the volume of the isolated switching power supply and improve the power density of the isolated switching power supply.

### Embodiment Sixth

As shown in FIG. 18, an output feedback method for an isolated power supply is provided, which includes the following steps.

At Step 181: an isolation transformer of the isolated power supply couples a first high-frequency switching signal on at least one secondary winding to at least one primary winding and forms a second high-frequency switching signal on the at least one primary winding. The isolation transformer includes: the at least one primary winding and the at least one secondary winding.

At Step 182: a controller at a side of the at least one primary winding obtains the second high-frequency switching signal, obtains an amplitude of a direct-current voltage signal according to a third high frequency switching signal, and control an inverter circuit according to the amplitude so as to configure the amplitude of the DC voltage signal as a preset threshold value.

In one embodiment, at step 182, the controller at the side of the at least one primary winding obtains the second high-frequency switching signal includes one of the following ways:
Way one, the controller at the side of the at least one primary winding obtains the second high-frequency switching signal from the at least one primary winding.

Way two, when the isolation transformer transmits the second high-frequency switching signal to an inverter circuit of the isolated power supply, the controller at the side of the at least one primary winding obtains the second high-frequency switching signal from the inverter circuit.

The output feedback method provided in this embodiment reduces the volume of the isolated power supply, increases the power density of the isolated power supply.

Through the above description of the embodiments, the skilled person in the art can clearly understand that the method provided in the above-mentioned embodiments is accomplished through software and a necessary universal hardware platform. Of course, the method is also implemented by hardware. However, in many cases, the former is preferred. Based on such understanding, the technical solution of the present invention or some parts contribution to the related art can be embodied in a software product. The computer software product is stored in a storage medium, such as a read-only memory (ROM), a random access memory (RAM), a magnetic disk, an optical disk), and the storage medium includes several instructions that enable a computer device (which is a mobile phone, a computer, a server, network equipment or the like) to perform the method provided in the various embodiments of the present invention.

It should be noted that the components are implemented by software or hardware. For the latter, it is achieved, but not limited to: the components are located on the same processor; or, the above components are respectively located in the plurality of processors.

One embodiment of the present invention also provides a storage medium. Alternatively, in this embodiment, the storage medium is include, but not limited to: a u disk, a ROM/RAM, a mobile hard disk, a magnetic disk or optical disk etc. and various media capable of storing program codes.

Obviously, the skilled person in the art should understand, each component or each step can be implemented by general computing devices, components or steps can be centralized in a single computing device, or distributed across multiple computing devices on a network. And optionally, components or steps are realized through executable program codes of a calculating device, so that components or steps are stored in a storage device and executed by the calculating device. And in some cases, components or steps are executed in an order different from an order of executing the shown or described steps herein, or components or steps are made into integrated circuit component respectively, or a plurality of the components or steps are manufactured into a single integrated circuit component. As such, the present invention is not limited to any specific combination of hardware and software.

The present invention is described in detail through the above contents with the specific embodiments, but it cannot be considered that the embodiments of the present invention are limited to the description. For the skilled person in the art, various simple deductions or replacements are made without departing from the scope of the present invention as defined in the appended claims, and all of which should be considered to belong to the protection scope of the present invention.

### Industrial Applicability

As disclosed above, at least some embodiments of the present invention provide the isolated power supply and the output feedback method for the isolated power supply, which have the following beneficial effects. The isolated power supply utilizes a characteristic of a bidirectional coupling of the isolation transformer, and reverse-couples and feeds back an amplitude signal of an output voltage of the isolated power supply through the isolation transformer originally existed in the isolated power supply, so as to avoid using an optical coupling component to feedback the amplitude signal. Moreover, in the isolated power supply, the controller is set at the primary side of the isolation transformer, so as to avoid using a transformer to perform isolation when the controller is set at the secondary side of the isolation transformer and the power is supplied to the controller. Thus, it can be seen that there is no need to increase the optical coupling component to the feedback amplitude signal and, when the power is supplied to the controller, there is also no need to increase the transformer for isolation during a process of the output feedback of the isolated power supply. Compared with the related art, the technical solution recited in the present invention can reduce a volume of an isolated switching power supply and improve a power density of the isolated switching power.

## Claims

1. An isolated power supply, comprising: an inverter circuit, an isolation transformer, a rectifier circuit and a controller, wherein the isolation transformer comprises at least one primary winding and at least one secondary winding, and the controller is located at a side of the at least one primary winding;
the inverter circuit is arranged to convert an input voltage signal of the isolated power supply into a first high-frequency switching signal, and transmit the first high-frequency switching signal to the at least one primary winding;
the isolation transformer is arranged to couple the first high-frequency switching signal on the at least one primary winding to the at least one secondary winding, form a second high-frequency switching signal on the at least one secondary winding, couple the second high-frequency switching signal on the at least one secondary winding to the at least one primary winding and form a third high-frequency switching signal on the at least one primary winding;
the rectifier circuit is arranged to convert the second high-frequency switching signal on the at least one secondary winding into a direct-current voltage signal;
the controller is arranged to obtain the third high-frequency switching signal, obtain an amplitude of the direct-current voltage signal according to the third high-frequency switching signal, and control the inverter circuit according to the amplitude so as to configure the amplitude as a preset threshold value.

2. The isolated power supply as claimed in claim 1, wherein the controller is arranged to obtain the third high-frequency switching signal from the at least one primary winding.

3. The isolated power supply as claimed in claim 2, wherein the at least one primary winding comprises a first primary winding and a second primary winding;
the inverter circuit is arranged to transmit the first high-frequency switching signal to the first primary winding;
the isolation transformer is arranged to couple the first high-frequency switching signal on the first primary side winding to the secondary winding, form the second high-frequency switching signal on the secondary winding, couple the second high-frequency switching signal on the secondary winding to the second primary side winding and form the third high-frequency switching signal on the second primary winding;
the controller is arranged to obtain the third high-frequency switching signal from the second primary winding.

4. The isolated power supply as claimed in claim 2 or 3, wherein further comprising: a resonant circuit;
the resonant circuit is arranged to, before the first high-frequency switching signal is transmitted from the inverter circuit to the isolation transformer, perform resonant processing on the first high-frequency switching signal.

5. The isolated power supply as claimed in claim 1, wherein
the inverter circuit is further arranged to receive the third high-frequency switching signal from the at least one primary winding;
the controller is arranged to obtain the third high-frequency switching signal from the inverter circuit.

6. The isolated power supply as claimed in claim 5, wherein the controller is arranged to obtain the third high-frequency switching signal from a signal input end of the inverter circuit, wherein the signal input end is arranged to receive the input voltage signal.

7. The isolated power supply as claimed in claim 6, wherein the inverter circuit is a full-bridge circuit composed of four Metal Oxide Semiconductor, MOS, transistors.

8. The isolated power supply as claimed in claim 7, wherein the full-bridge circuit comprises a first N-channel Metal Oxide Semiconductor, NMOS, transistor, a second NMOS transistor, a third NMOS transistor, a fourth NMOS transistor, a first signal input end and a second signal input end;
a drain electrode of the first NMOS transistor having is connected with the first signal input end, a source electrode of the first NMOS transistor is connected with a drain electrode of the second NMOS transistor, the source electrode of the first NMOS transistor is further connected with one end of the at least one primary winding, a source electrode of the second NMOS source is connected with the second signal input end;
a drain electrode of the fourth NMOS transistor is connected with the first signal input end, a source electrode of the fourth NMOS transistor is connected with a drain electrode of the third NMOS transistor, the source electrode of the fourth NMOS transistor is connected with another end of the at least one primary winding, and an source electrode of the third NMOS transistor is connected with the second signal input end;
a grid electrode of the first NMOS transistor, a grid electrode of the second NMOS transistor, a grid electrode of the third NMOS transistor and a grid electrode of the fourth NMOS transistor are connected with the controller;
the controller is connected with the first signal input end or the second signal input end.

9. The isolated power supply as claimed in any one of claims 1-3 and 5-8, wherein the controller comprises: an amplitude obtaining component and a loop control component;
the amplitude obtaining component is arranged to obtain the third high-frequency switching signal, and obtain the amplitude of the direct-current voltage signal according to the third high-frequency switching signal;
the loop control component is arranged to compare the amplitude with the preset threshold value, and control the inverter circuit according to a comparison result so as to configure the amplitude as the preset threshold value.

10. The isolated power supply as claimed in claim 9, wherein the amplitude obtaining component is an analog-to-digital conversion component;
the analog-to-digital conversion component is arranged to obtain the third high-frequency switching signal, convert the third high-frequency switching signal to a digital signal, and obtain the amplitude of the DC voltage signal according to the digital signal.

11. An output feedback method for an isolating power supply, comprising:
coupling, by an isolation transformer of the isolated power supply, a first high-frequency switching signal on at least one secondary winding to at least one primary winding and forming, by an isolation transformer of the isolated power supply, a second high-frequency switching signal on the at least one primary winding, wherein the isolation transformer comprises: the at least one primary winding and the at least one secondary winding;
obtaining, by a controller at a side of the at least one primary winding, the second high-frequency switching signal, obtaining, by the controller, an amplitude of a direct-current voltage signal according to a third high frequency switching signal, and controlling, by the controller, an inverter circuit according to the amplitude so as to configure the amplitude of the DC voltage signal as a preset threshold value.

12. The output feedback method as claimed in claim 11, wherein obtaining, by the controller at the side of the at least one primary winding, the second high-frequency switching signal comprises:
obtaining, by the controller at the side of the at least one primary winding, the second high-frequency switching signal from the at least one primary winding;
or,
when the isolation transformer transmits the second high-frequency switching signal to an inverter circuit of the isolated power supply, obtaining, by the controller at the side of the at least one primary winding, the second high-frequency switching signal from the inverter circuit.
